# EUROPEAN PATENT APPLICATION

(11) **EP 1 916 455 A2**
(43) Date of publication of application: **30.04.2008**
(21) Application number: 07118492.3
(22) Date of filing: 15.10.2007
(51) Int. Cl.: F16H 61/662

(54) **Nonrotational torque sensing belt drive**

(30) Priority: 26.10.2006 US 588534
(71) Applicant: Deere & Company, Moline, IL 61265-8098 (US)
(72) Inventor: Teijido, Joseph A., East Moline, IL 61244 (US); Hawkins, Robert W., Rapids City, IL 61278 (US); Anderson, Daniel R., Bettendorf, IA 52722 (US)
(74) Representative: Holst, Sönke

(57) **Abstract**

A belt drive (100) configured to be driven by a belt (172) comprises a first sheave assembly (102) with a first sheave half (110); a second sheave assembly (104) with a second sheave half (124), wherein the second sheave assembly (104) is coupled to the first sheave assembly (102) to slide but not rotate with respect thereto. A pinion (108) is coaxial with the second sheave half (124) axis and supports the first and second sheave assemblies (102, 104). A spring and cam assembly (106) is coupled to the first sheave assembly (102), automatically translating the first sheave half (110) toward the second sheave half (124) in response to an increase in belt tension.

## Description

The invention relates to belt drives. More particularly, it relates to belt drives having variable spacing v-belt sheaves.

Belt drives are commonly used in a variety of industrial applications for communicating power from a belt to a rotating shaft. In one common arrangement, the belt drive has two sheave-halves that move closer to and farther from each other as load on the belt drive changes, thereby causing the belt (which is supported on and between the two sheave halves) to move farther from or closer to, respectively, the rotational axis of the sheave.

This variable sheave spacing is useful because it changes the ratio between the rotational speed of the belt drive on its shaft and the linear speed of the belt that is driving the belt drive as well as varying the belt tension proportional to the torque that is transmitted.

One problem with all belt drives is wear of the internal components, and wear on the belts themselves. As the applicants have discovered, part of this wear is due to the relative rotation of the sheave halves with respect to each other as their axial spacing changes.

What is needed, therefore, is a belt drive that eliminates the relative rotation of one sheave half with respect to the other sheave half when the axial spacing of the two sheave halves is varied by the belt drive. It is an object of this invention to provide such a belt drive.

This object is achieved with the subject matter of claim 1. The dependent claims recite advantageous embodiments.

In accordance with the invention, a belt drive configured to be driven by a belt is provided, the belt drive comprising: a first sheave assembly having a first longitudinal axis, the first sheave assembly comprising at least a first sheave half; a second sheave assembly having a second longitudinal axis coaxial with the first longitudinal axis, the second sheave assembly further comprising at least a second sheave half, wherein the second sheave assembly is coupled to the first sheave assembly to slide but not rotate with respect thereto; a pinion having a third longitudinal axis that is coaxial with the second longitudinal axis and on which both the first and second sheave assemblies are supported; and a spring and cam assembly coupled to the first sheave assembly, the spring and cam assembly being configured to translate the first sheave half toward the second sheave half when tension in the belt increases.

The first sheave assembly may comprise an internally splined housing fixed to the first sheave half and wherein the second sheave assembly comprises an externally splined hub fixed to the second sheave half. The first sheave assembly may comprise a first cam, and the spring and cam assembly may comprise a second cam, and further the first cam and second cam may be interengaged to drive the first sheave half toward the second sheave half in an axial direction when torque is increased on the first sheave half or the second sheave half. The pinion may be removably fixed to the second cam. The belt drive may further comprise a spring cover, and the spring and cam assembly may further comprise a coil compression spring disposed inside the spring cover, the spring having one end abutting an outer surface of the first sheave assembly and the spring having a second end abutting a spring cover that in turn is fixed to the second cam. The second sheave assembly may further comprise a hub having a flange portion fixed to an axially extending cylindrical portion, and further wherein the second sheave half is bolted to the flange portion. The second sheave assembly may further comprise a sleeve that extends axially and is disposed between the hub and the pinion to support the hub on the pinion. The second sheave assembly may further comprise a splined hub having external splines configured to engage with mating splines on the first sheave assembly and internal splines configured to mate with external splines on the hub. The first sheave assembly may further comprise a housing that is bolted to the first sheave half, the housing being generally cylindrical and having a splined cylindrical internal surface configured to engage a splined external surface of the second sheave assembly. The first sheave assembly may further comprise a cam follower that is generally cylindrical and may have a first cam surface disposed on an internal wall thereof, and the cam follower maybe bolted to the housing. The spring and cam assembly may further comprise a cam having a second cam surface disposed on an outer surface thereof, and the first cam surface may be configured to engage the second cam surface to move the first sheave half closer to the second sheave half when tension in the belt increases.

### An embodiment of the invention is shown in the drawings, in which:

FIGURE 1 is an exploded view of a belt drive in accordance with the present invention.
FIGURE 2 is a cross-sectional view of the belt drive of FIGURE 1 (assembled) taken along the longitudinal axis of the belt drive.
FIGURE 3 is a cross-sectional view of the belt drive of FIGURES 1-2 (assembled) taken along the longitudinal axis of the belt drive in which the spacing between the first and second sheave halves is different than the spacing illustrated in FIGURE 2.

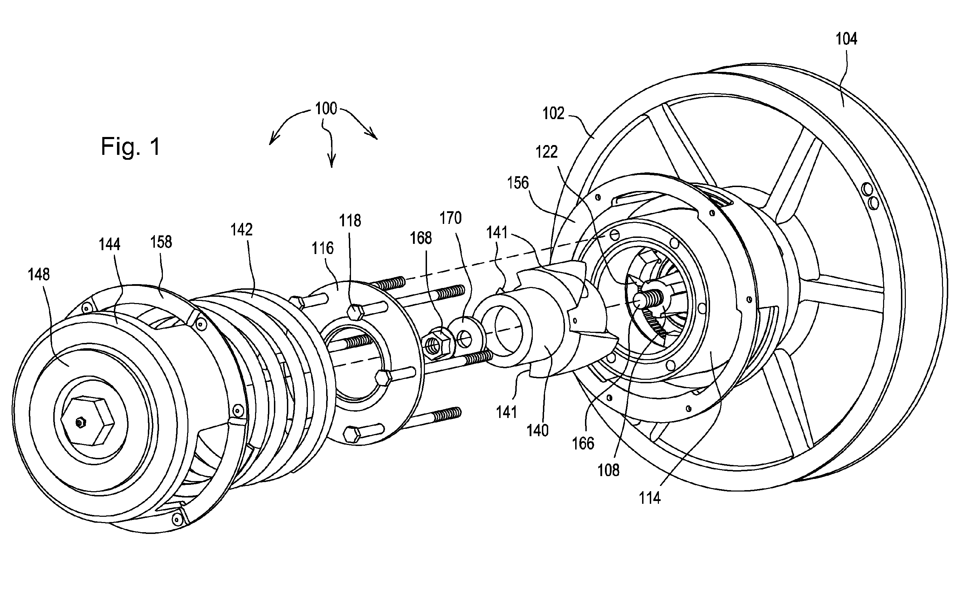

Referring now to FIGURES 1-3, a belt drive 100 is disclosed, the belt drive comprising a first sheave assembly 102, a second sheave assembly 104, a spring and cam assembly 106, and a pinion shaft 108. The first sheave assembly 102 comprises a first sheave half 110, a first housing 112, a cam follower 114, cover 116, and bolts 118. Bolts 118 extend through cover 116, cam follower 114, housing 112, and into first sheave half 110, fixing these components together to make first sheave assembly 102. Housing 112 has an inner wall 120 with inwardly spacing splines. Cam follower 114 has three cam surfaces 122 disposed on an inner surface thereof. Cam surfaces 122 are helical and are spaced equidistantly apart about the longitudinal axis of cam follower 114.

The second sheave assembly 104 comprises a second sheave half 124, a hub 126, a sleeve 128, bushings 134, 136, and splined hub 138. Sleeve 128 is supported on pinion shaft 108 and is prevented from moving toward the right (in the FIGURES) with respect to pinion shaft 108 because of an tapered shoulder on sleeve 128 that engages a mating tapered shoulder 130 on pinion shaft 108. Hub 126 is supported on sleeve 128 on bushings 134 and 136. Second sheave half 124 is bolted to hub 126 with bolts 150. Splined hub 138 is mounted on hub 126 and is secured thereon by a snap ring 152. Splined hub 138 has internal splines that engage external splines on hub 126 thereby preventing splined hub 138 from rotating with respect to hub 126.

Bushings 134 and 136 permit the slight relative rotational movement of hub 126 with respect to sleeve 128 as the belt drive 100 operates and first sheave assembly 102 moves axially with respect to second sheave assembly 104. This relative movement is typically less than 90°, and only occurs when the two sheave assemblies 102, 104 change their relative axial positions. A seal 154 is disposed between hub 126 and sleeve 128 to prevent dirt from entering the space between hub 126 and sleeve 128.

The spring and cam assembly 106 comprises cam 140, spring 142, spring cover 144, washer 146 and spring cover retainer 148. Spring cover 144 further comprises a first cover portion 156 and a second cover portion 158. These two cover portions abut one another and substantially enclose spring 142. Pinion shaft 108 comprises a shaft portion having a high-speed gear 162 and a low-speed gear 164 that have teeth extending outward from shaft portion and are disposed in adjacent positions along an exposed length of the shaft portion. Devices that are driven by belt drive 100 (not shown) are selectively coupled to one of these gears to be driven thereby. Pinion shaft 108 has a threaded end portion 166 that is disposed inside the first sheave assembly 102 and to which a nut 168 and washer 170 are fixed. The nut and washer fix shaft 162 to cam 140.

Cam 140 has internal threads that are threadedly engaged to an externally threaded portion of spring cover retainer 148. Spring cover retainer 148 abuts washer 146, and washer 146 abuts spring cover 144. Cam 140 has three helical cam surfaces 141 that are disposed equidistantly spaced apart on an outer surface of cam 140 about the longitudinal axis of cam 140 to engage three corresponding cam surfaces 122 of cam follower 114. While in the preferred embodiment there are three cam surfaces 141 any number, either more or less is sufficient if that number will cause cam follower 114 to slide with respect to cam 140 when the cam follower and cam are twisted with respect to each other about their common longitudinal axis.

Spring 142 is a coil compression spring. It has a first end that abuts spring cover 144, and has a second end that abuts a collar 169 that in turn engages an outwardly extending shoulder on an outer circumferential surface of first sheave assembly 102. In this manner, spring 142 couples pinion shaft 108 to first sheave assembly 102, providing a spring force that pushes first sheave assembly 102 axially toward second sheave assembly 104. In operation, the spring force generated by spring 142 causes the first sheave assembly 102 to press against a belt 172, which in turn presses against second sheave assembly 104. Second sheave assembly 104, however, abuts shoulder 130 on pinion shaft 108, preventing the collar, and therefore preventing sheave assembly 104, from moving away from first sheave assembly 102. Thus spring 142 applies a force to other components of belt drive 100 that tends to force the two sheave halves 110, 124 together, and thereby force belt 172 radially outward away from the longitudinal axis 174 of belt drive 100.

The axial spacing between the first and second sheave halves 110, 124 will vary, however, as the tension in belt 172 increases or decreases. As the spacing increases, the compression in spring 142 will also increase. During this change in axial spacing the first sheave half 110 and the second sheave half 124 will not rotate with respect to each other about their common longitudinal axis 174.

### The relative spacing of the two sheave halves changes in the following manner:

Assume there is an increase in tension in belt 172. This increase in tension in the belt causes an increase in torque applied to the first and second sheave halves 110, 124 about their common longitudinal axis 174. The two sheave halves communicate that torque to the rest of their sheave halve assemblies 102, 104. The torque applied to sheave half 124 is communicated to splined hub 138. The splined hub 138 has external splines that are engaged with internal splines on the inside surface of housing 112 of first sheave assembly 102. The splines on the inside surface of housing 112 are much longer (in an axial direction) than the splines on splined hub 138. This difference permits splined hub 138 to slide back and forth with respect to housing 112, while their splines remained engaged. Thus, the splines on housing 112 and splined hub 138 prevent the first and second sheave assemblies 102, 104 from rotating with respect to each other, while permitting them to slide axially with respect to each other. The torque applied to the second sheave half 124 is communicated to housing 112 of first sheave assembly 102 through hub 138. No torque is applied by either sheave assembly directly to shaft portion 160 of pinion shaft 108. The second sheave assembly 104 is supported on sleeve 128, which merely supports hub 126 on pinion shaft 108 and does not communicate torque about longitudinal axis 174 from hub 126 to pinion shaft 108. Sleeve 128 has an axially facing shoulder 176 that abuts a mating axially facing shoulder 178 on hub 126, with a thrust washer 180 disposed therebetween. This arrangement of two shoulders and a thrust washer communicates axial forces acting on sheave half 124 by belt 172 to hub 126, then to sleeve 128, and then to shoulder 130 on pinion shaft 108. This arrangement communicates axial forces along longitudinal axis 174, but does not communicate torques about longitudinal axis 174.

As described above, the torques applied to sheave halves 110, 124 are communicated to housing 112. Housing 112 is fixed to cam follower 114. Cam follower 114 has cam surfaces 122 which engage mating cam surfaces 141 on cam 140. The six cam surfaces 122, 141 are disposed at an angle with respect to each other such that the torque applied by cam follower 114 to cam 140 causes cam 140 to exert a reaction force on cam follower 114 in an axial direction parallel to longitudinal axis 174 and toward gears 162, 164. This reaction force pushes first sheave assembly 102 axially toward second sheave assembly 104. This movement reduces the axial space between first sheave half 110 and second sheave half 124. Since first and second sheave assemblies 102, 104 are engaged to each other through interengaging splines on the outer surface of hub 138 and the inner surface of housing 112, this axial movement of first sheave assembly 102 toward second sheave assembly 104 does not include any relative rotation about the longitudinal axis 174 between the two sheave assemblies.

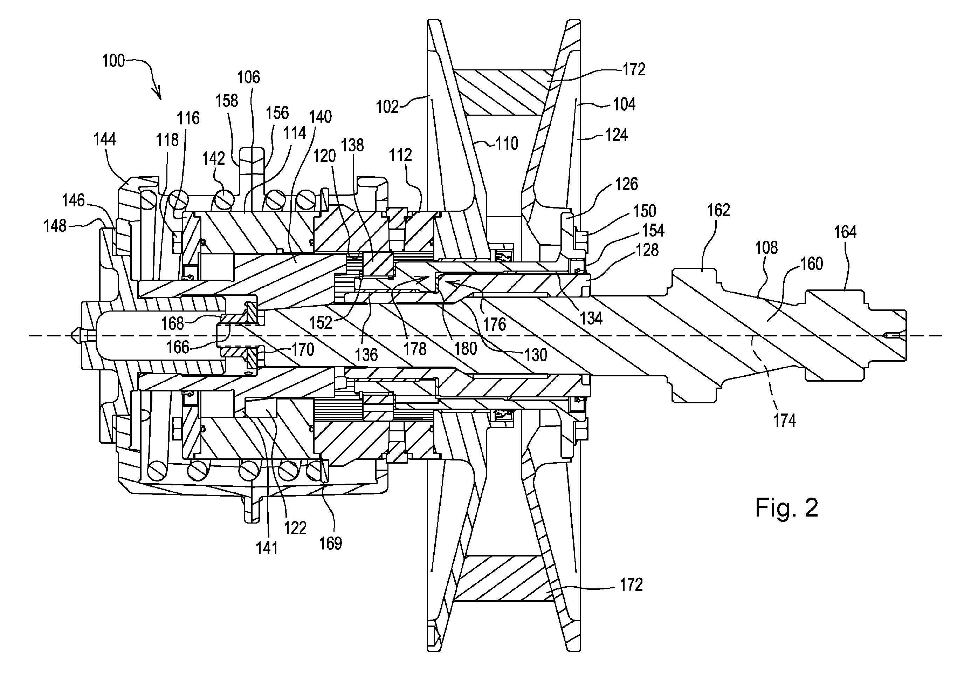

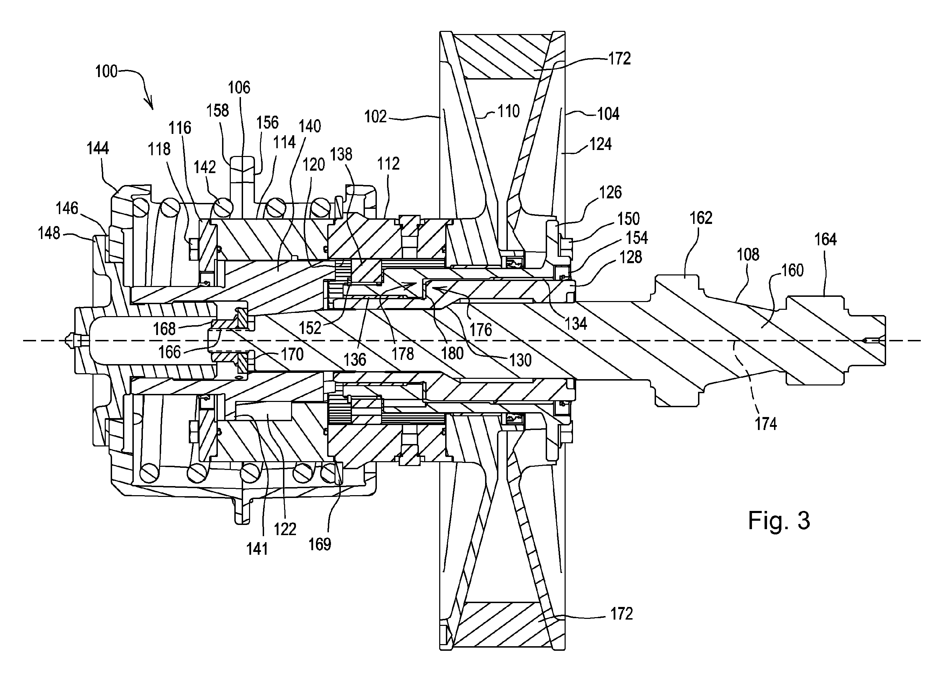

This change in relative axial position without relative rotation is shown by comparing FIGURE 2 to FIGURE 3. FIGURE 2 shows the belt drive 100 in a first operational position with the first and second sheave halves 110, 124 spaced a relatively large distance apart. FIGURE 3 shows the belt drive 100 in a second operational position in which the first and second sheave halves 110, 124 are spaced relatively close together. The belt drive 100 illustrated in both these figures is identical. The only difference between the two illustrations is the position of the first sheave assembly 102 with respect to the second sheave assembly 104.

Increased torque applied by belt 172 to belt drive 100 causes the two sheave halves 110, 124 to move closer together in an axial direction without rotation relative to each other. The reverse is also true. By the same analysis, a reduction in the tension in belt 172 causes the two sheave halves to move farther apart. Again, this occurs without any relative rotation about longitudinal axis 174 of one sheave half with respect to the other.

Each of the components discussed above with the exclusion of individual bolts 118 are coaxial with longitudinal axis 174.

## Claims

1. A belt drive (100) configured to be driven by a belt (172), the belt drive (100) comprising:
a first sheave assembly (102) having a first longitudinal axis, the first sheave assembly (102) comprising at least a first sheave half (110);
a second sheave assembly (104) having a second longitudinal axis coaxial with the first longitudinal axis, the second sheave assembly (104) further comprising at least a second sheave half (124), wherein the second sheave assembly (104) is coupled to the first sheave assembly (102) to slide but not rotate with respect thereto;
a pinion (108) having a third longitudinal axis that is coaxial with the second longitudinal axis and on which both the first and second sheave assemblies (102, 104) are supported; and
a spring and cam assembly (106) coupled to the first sheave assembly (102), the spring and cam assembly (106) being configured to automatically translate the first sheave half (110) toward the second sheave half (124) in response to an increase in belt tension.

2. The belt drive (100) of claim 1, wherein the first sheave assembly (102) comprises an internally splined housing (112) fixed to the first sheave half (110) and wherein the second sheave assembly (104) comprises an externally splined hub (126) fixed to the second sheave half (124).

3. The belt drive (100) of claim 1 or 2, wherein the first sheave assembly (102) comprises a first pinion (108) with a first cam (122), and wherein the spring and cam assembly (106) comprises a second cam (141), and further wherein the first cam (122) and second cam (141) are interengaged to drive the first sheave half (110) toward the second sheave half (124) in an axial direction when torque is increased on the first sheave half (110) or the second sheave half (124).

4. The belt drive (100) of claim 3, wherein the pinion (108) is removably fixed to the second cam.

5. The belt drive (100) of claim 4, further comprising a spring cover (144), and wherein the spring and cam assembly (106) further comprise a coil compression spring (142) disposed inside the spring cover (144) and having one end abutting an outer surface of the first sheave assembly (102) and the second end abutting the spring cover (144), that in turn is fixed to the second cam (141).

6. The belt drive (100) of one of claims 1 to 5, wherein the second sheave assembly (104) further comprises a hub (126) having a flange portion fixed to an axially extending cylindrical portion, and further wherein the second sheave half (124) is bolted to the flange portion.

7. The belt drive (100) of claim 6, wherein the second sheave assembly (104) further comprises a sleeve (128) that extends axially and is disposed between the hub (126) and the pinion (108) to support the hub (126) on the pinion.

8. The belt drive (100) of claim 7, wherein the second sheave assembly (104) further comprises a splined hub (138) having external splines configured to engage with mating splines on the first sheave assembly (102) and internal splines configured to mate with external splines on the hub (138).

9. The belt drive (100) of one of claims 1 to 8, wherein the first sheave assembly (102) further comprises a housing (112) that is bolted to the first sheave half (102), the housing (112) being generally cylindrical and having a splined cylindrical internal surface configured to engage a splined external surface of the second sheave assembly (104).

10. The belt drive (100) of claim 9, wherein the first sheave assembly (102) further comprises a cam follower (114) that is generally cylindrical and has a first cam surface disposed on an internal wall thereof, wherein the cam follower (114) is bolted to the housing (112).

11. The belt drive (100) of claim 10, wherein the spring and cam assembly (106) further comprise a cam (140) having a second cam surface disposed on an outer surface thereof, wherein the first cam surface is configured to engage the second cam surface to move the first sheave half (110) closer to the second sheave half (124) when tension in the belt increases.
